# FASCICULE DE BREVET EUROPEEN

(11) **EP 1 981 185 B1**
(45) Date de publication et mention de la délivrance du brevet: **25.12.2013**
(21) Numéro de dépôt: 08103184.1
(22) Date de dépôt: 31.03.2008
(51) Int. Cl.: G02B 6/44, H04B 10/27

(54) **Dispositif de dérivation d'une ligne de transmission en fibres optiques**
Vorrichtung zur Verzweigung einer optischen Faser-Übertragungsstrecke
Device for the derivation of an optical fibre transmission line

(30) Priorité: 03.04.2007 FR 0754230; 13.11.2007 FR 0758994
(43) Date de publication de la demande: 15.10.2008
(73) Titulaire: Schneider Electric Industries SAS, 92500 Rueil-Malmaison (FR)
(72) Inventeur: Ducoffe, Hervé, 78610, LE PERRAY EN YVELINES (FR); Masse, Dominique, 91360, EPINAY SUR ORGE (FR); Perrin, Alain, 38500, SAINT NICOLAS DE MACHERIN (FR); Weisse, Sébastien, 78320, LE MESNIL SAINT DENIS (FR)
(74) Mandataire: Bié, Nicolas

(56) Documents cités:
- EP-A- 1 838 017
- WO-A-97/41476
- JP-A- 63 136 007
- US-A- 3 902 786
- US-A- 4 941 720
- US-A- 5 109 467
- US-A- 5 659 655

## Description

La présente invention se rapporte à un dispositif de dérivation utilisable dans une infrastructure de communication réalisée en fibres optiques. L'invention concerne également l'infrastructure de communication comportant un ou plusieurs dispositifs de dérivation de l'invention.

Une infrastructure de communication informatique fonctionnant sous un protocole par exemple de type Ethernet, ATM ou Token Ring peut présenter plusieurs topologies différentes. Les topologies les plus connues sont celles en étoile, en bus ou en anneau.

Dans une topologie en étoile, des serveurs sont reliés à un concentrateur ("hub" en anglais) principal se développant par plusieurs branches en étoile vers plusieurs équipements secondaires auxquels des terminaux informatiques T sont par exemple connectés directement ou par l'intermédiaire de commutateurs réseau ("switch" en anglais). Typiquement, dans une infrastructure locale, le concentrateur principal est implanté dans un local central d'un bâtiment et les équipements secondaires sont délocalisés dans des locaux situés au plus près des terminaux informatiques des utilisateurs finaux.

Les branches reliant le concentrateur principal aux équipements secondaires sont par exemple réalisées en fibres optiques. Par rapport à un câble coaxial ou à une paire torsadée, la fibre optique est adaptée pour véhiculer des données à des débits toujours plus élevés. En outre, elle présente de nombreux autres avantages liés notamment à l'immunité du signal le long de la fibre optique, à la fiabilité et à la sûreté de la transmission sur de longues distances.

Cependant, lorsqu'un nouvel équipement secondaire doit être installé et relié au concentrateur principal, la topologie physique du réseau en étoile oblige à tirer un nouveau câble en fibres optiques du concentrateur principal à l'équipement secondaire. Or, l'installation sur mesure d'un câble en fibres optiques est souvent onéreuse et doit être confiée à des spécialistes.

Une infrastructure de communication présentant une topologie en bus permet de remédier à ce problème. Dans une topologie physique en bus, un seul câble est connecté au concentrateur principal et ce câble présente plusieurs dérivations menant aux équipements secondaires. La quantité de câble à tirer entre le bus et les équipements secondaires est donc réduite et l'infrastructure est plus aisée à installer. Cependant, lorsque le câble est en fibres optiques, chaque dérivation effectuée sur les fibres optiques vers un équipement secondaire entraîne une atténuation du signal. De plus, actuellement, effectuer une dérivation sur un câble en fibres optiques s'avère techniquement difficile à mettre en oeuvre.

Les demandes de brevets WO 97/41476 et US 4,941,720 présentent des solutions pour réaliser une dérivation sur une ligne de transmission en fibres optiques. Cependant, ces solutions ne tiennent pas compte de la qualité du signal et nécessitent de recourir à des spécialistes en fibres optiques pour leur installation.

Par ailleurs, il est connu du document JP63136007 un boîtier de dérivation permettant de dériver simplement un câble optique. Cependant, le boîtier ne permet pas de garantir à l'utilisateur final une qualité de signal optimale, notamment lorsque plusieurs boîtiers de ce type sont utilisés pour dériver un même câble optique. En effet, à chaque dérivation d'une même paire de fibres optiques, le signal est atténué. Dans un câble optique qui comporte plusieurs paires de fibres optiques, il est intéressant de pouvoir distribuer un signal optimal à plusieurs utilisateur en utilisant un même dispositif pour dériver les paires de fibres optiques.

Le but de l'invention est donc de pouvoir réaliser une infrastructure de communication à base de fibres optiques qui soit adaptée au lieu d'implantation, qui garantisse à l'utilisateur final une qualité de service et de signal optimale et qui ne nécessite pas de tirer de nombreux câbles et de faire appel à des spécialistes.

Ce but est atteint par un dispositif de dérivation prééquipé utilisable dans une infrastructure de communication présentant une ligne de transmission constituée de paires de fibres optiques, ledit dispositif comportant plusieurs paires de guides optiques et se caractérise en ce qu'il comporte également :
- n points de connexion d'entrée de rangs 1 à n, correspondants à n points de connexion de sortie de rangs 1 à n,
- chaque point de connexion d'entrée et de sortie recevant les terminaisons d'une paire de guides optiques,
- deux points de connexion de dérivation recevant chacun les terminaisons d'une paire de guides optiques, et en ce que :
   - les points de connexion d'entrée de rangs 1 à n-1 sont connectés respectivement par une paire de guides optiques continues aux points de connexion de sortie de rangs 2 à n,
   - le point de connexion de sortie de rang 1 est connecté par une paire de guides optiques continues à un premier point de connexion de dérivation,
   - le point de connexion d'entrée de rang n est connecté par une paire de guides optiques continues à un second point de connexion de dérivation.

Selon l'invention, n est choisi supérieur ou égal à deux.

Le dispositif de dérivation de l'invention permet ainsi de pouvoir dériver une paire de fibres optiques différente à chaque nouveau boîtier inséré et ainsi d'éviter de toujours dériver la même paire de la ligne de transmission.

Selon un premier mode de réalisation de l'invention, le dispositif est constitué de deux demi-boîtiers, un premier demi-boîtier portant les points de connexion d'entrée et le premier point de connexion de dérivation et un second demi-boîtier portant les points de connexion de sortie et le second point de connexion de dérivation. Cette réalisation permet notamment de réduire au maximum le nombre de connecteurs optiques employés dans le dispositif.

Selon une particularité, le premier demi-boîtier, respectivement le second demi-boîtier, d'un dispositif de dérivation est apte à se connecter sur le second demi-boîtier, respectivement le premier demi-boîtier, d'un dispositif de dérivation identique adjacent.

Selon une autre particularité, chaque demi-boîtier se présente sous la forme d'une poignée préhensible manuellement, chaque poignée portant respectivement les points de connexion d'entrée et les points de connexion de sortie.

Selon une autre particularité, les deux poignées sont reliées entre elles par un câble optique contenant les guides optiques, ledit câble optique étant enroulé autour d'une bobine montée sur un socle, le câble optique enroulé autour de la bobine ayant un rayon de courbure adapté pour permettre le transport d'un signal.

Selon une autre particularité, l'une des poignées est montée sur un rail formé sur la bobine.

Selon une autre particularité, le dispositif comporte un adaptateur de raccordement branché sur le premier point de connexion de dérivation, respectivement second point de connexion de dérivation, et sur le second point de connexion de dérivation, respectivement premier point de connexion de dérivation, d'un dispositif de dérivation identique adjacent de manière à assurer la continuité optique lorsque le point de dérivation n'est pas employé.

Selon une autre particularité, les points de connexion d'entrée sont par exemple de type mâle et les points de connexion de sortie sont par exemple de type femelle. Les points de connexion d'entrée et de sortie peuvent également être identiques et connectés sur une traversée formant une connectique commune.

Selon une autre particularité, les guides optiques sont constitués de fibres optiques.

Selon une autre particularité, les points de connexion d'entrée et de sortie, ainsi que les points de connexion de dérivation sont constitués de connecteurs multifibres.

Selon une autre particularité, les guides optiques sont formés dans un composant à gaine artificielle comportant un substrat dans lequel est formé un coeur de guide optique.

Selon une autre particularité, l'infrastructure de communication fonctionne sous le protocole Ethernet.

L'invention concerne également une infrastructure de communication, qui se caractérisé en ce qu'elle comporte au moins un concentrateur relié à une première extrémité d'une ligne de transmission comprenant au moins deux câbles optiques de transport et plusieurs dispositifs de dérivation tels que défini ci-dessus pour former des points de dérivation le long de la ligne de transmission, ledit concentrateur étant apte à envoyer des données sur chaque paire de guides optiques de la ligne de transmission.

Selon un premier mode de réalisation, la ligne de transmission présente une seconde extrémité raccordée au concentrateur par une liaison optique de retour.

Selon un second mode de réalisation, la ligne de transmission présente une seconde extrémité raccordée à un second concentrateur apte à envoyer des données sur chaque paire de guides optiques de la ligne de transmission.

Selon un troisième mode de réalisation, la ligne de transmission présente une seconde extrémité à laquelle les paires de guides optiques sont raccordées deux par deux par l'intermédiaire d'un connecteur.

Selon une particularité, le concentrateur comporte un connecteur multi-fibres pour connecter une extrémité de la ligne de transmission.

Selon une autre particularité, l'infrastructure de communication fonctionne sous le protocole Ethernet.

Selon l'invention, la construction d'une infrastructure de communication locale est aisée, puisqu'elle est réalisée par simple aboutement de plusieurs câbles séparés entre eux par des dispositifs de dérivation. La longueur des câbles peut être variable ce qui permet de pouvoir positionner les dispositifs sans contrainte en s'adaptant au lieu d'implantation de l'infrastructure. En outre, ajouter un équipement secondaire ne présente aucune difficulté car les dispositifs de dérivation sont prééquipés de connecteurs. La dérivation de la fibre optique permet ainsi d'amener un signal à un fort débit au moins jusqu'à l'équipement secondaire et donc au plus près du terminal de l'utilisateur final.

Selon l'invention, l'emploi de dispositifs de dérivation du type décrit dans cette demande permet une grande modularité non seulement dans l'assemblage et l'installation d'une infrastructure de communication mais également dans le choix de la topologie mise en oeuvre. Il est notamment possible de réaliser différents types de topologie connus, tels que des topologies en étoile, en cascade ("daisy chain") ou en anneau ("ring").

En effet, il est ainsi possible de réaliser une topologie physique de type étoile simple en connectant un équipement secondaire sur chaque paire de fibres optiques.

Dans une topologie physique de type "daisy chain", chaque paire de fibres optiques de la ligne de transmission peut être dérivée plusieurs fois en utilisant plusieurs dispositifs de dérivation.

Dans une topologie physique de type "ring", chaque paire de fibres optiques de la ligne de transmission peut être dérivée plusieurs fois en utilisant plusieurs dispositifs de dérivation. La dernière paire de fibre optique de la ligne de transmission est quant à elle rebouclée vers l'équipement initial d'où était issue la première paire de fibres optiques.

Selon l'invention, l'infrastructure de communication peut comporter plusieurs câbles de transports séparés par plusieurs dispositifs de dérivation de l'invention répartis le long de la ligne de transmission. Si certains dispositifs de dérivation de la ligne ne sont pas employés, on utilise un adaptateur de raccordement pour assurer la continuité de la paire de fibres optiques dérivée à cet endroit.

L'infrastructure de communication de l'invention est particulièrement adaptée pour fonctionner sous un protocole permettant le transfert de données par fibres optiques tel que par exemple Ethernet, ATM ou "Token Ring".

D'autres caractéristiques et avantages vont apparaître dans la description détaillée qui suit en se référant à un mode de réalisation donné à titre d'exemple et représenté par les dessins annexés sur lesquels :
- la figure 1 représente un premier mode de réalisation du dispositif de dérivation de l'invention,
- la figure 2 représente une variante de réalisation du premier mode de réalisation du dispositif de l'invention de la figure 1,
- la figure 3 représente la connexion de deux dispositifs de dérivation de l'invention semblables à ceux de la figure 1,
- la figure 4 représente un second mode de réalisation du dispositif de dérivation de l'invention,
- la figure 5 représente une variante de réalisation du second mode de réalisation du dispositif de l'invention de la figure 4,
- la figure 6 représente une autre variante de réalisation du second mode de réalisation du dispositif de l'invention de la figure 4,
- la figure 7 représente un connecteur de rebouclage utilisable dans une infrastructure de communication de l'invention,
- les figures 8 à 10 représentent en détails une réalisation du dispositif représenté en figure 1,
- la figure 11 représente une infrastructure de communication mise en oeuvre à partir de dispositifs de dérivation tels que représentés en figure 4,
- la figure 12 représente un composant à gaine artificielle employé pour guider une onde lumineuse,
- les figures 13A à 13D illustrent le procédé de fabrication d'un composant à gaine artificielle vu en coupe transversale.

L'invention consiste à proposer un dispositif de dérivation pour dériver une ligne de transmission en fibres optiques véhiculant des données dans une infrastructure de communication d'une topologie déterminée. Le dispositif de dérivation peut se présenter sous différents modes de réalisation. L'infrastructure de communication est déployée à partir d'une pluralité de câbles optiques de transports d'une longueur déterminée reliés entre eux par des dispositifs de dérivation de l'invention.

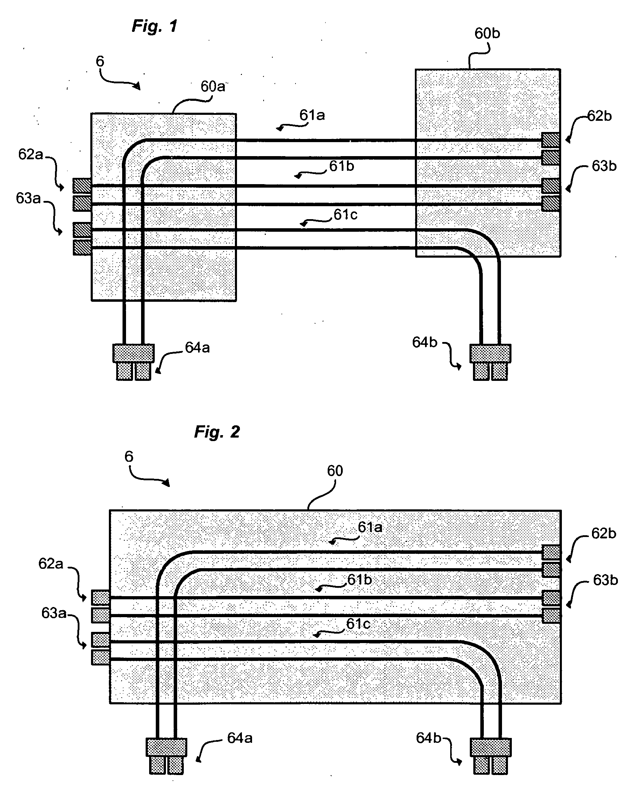

Un premier mode de réalisation du dispositif de l'invention est représenté en figures 1 et 2.

Sur les figures 1 et 2, le dispositif de dérivation 6 est par exemple adapté pour dériver une ligne de transmission à trois paires de fibres optiques. Dans ce premier mode de réalisation, le dispositif 6 inclut donc trois paires de fibres optiques 61 a, 61 b, 61 c (désignées 61 de manière générale). Le dispositif 6 comporte en outre deux points de connexion d'entrée 62a, 63a recevant chacun les deux terminaisons d'une paire de fibres optiques 61 et deux points de connexion de sortie 62b, 63b recevant chacun deux terminaisons d'une paire de fibres optiques 61 du dispositif. Les points de connexion d'entrée 62a, 63a sont par exemple de type mâle ou femelle aptes à se connecter à des points de connexion correspondants formés sur un concentrateur, sur un câble optique de transport ou à des points de connexion de sortie 62b, 63b d'un dispositif de dérivation identique adjacent.

Par ailleurs, le dispositif de dérivation 6 selon ce premier mode de réalisation comporte également deux points de connexion de dérivation 64a, 64b recevant chacun les terminaisons de deux paires de fibres optiques 61 du dispositif.

Les deux points de connexion d'entrée 62a, 63a et de sortie 62b, 63b, ainsi que les points de connexion de dérivation 64a, 64b peuvent être constitués de plusieurs connecteurs monofibres pour chaque fibre optique, ou de un ou plusieurs connecteurs multifibres recevant une ou plusieurs paires de fibres optiques 61. Lorsque les connecteur sont multifibres, ils sont par exemple de type MPO (pour "Multi-fibers Push On"), MF ou MTP ou sont constitués d'un groupement de connecteurs duplex du type LC, SC ou MRTJ sur lesquels peuvent se brancher un connecteur complémentaire ou tout autres connecteurs remplissant cette fonction.

Selon l'invention, le dispositif de dérivation 6 consiste à décaler les paires de fibres optiques 61 a, 61 b, 61 c le long de la ligne de transmission de manière à dériver une paire de fibres optiques différente au niveau de chaque point de dérivation créé le long de la ligne de transmission.

Dans ce premier mode de réalisation, les points de connexion d'entrée 62a, 63a correspondent aux points de connexion de sortie 62b, 63b de sorte que le premier point de connexion d'entrée 62a est apte à se connecter sur le premier point de connexion de sortie 62b d'un dispositif adjacent et que le second point de connexion d'entrée 63a est apte à se connecter sur le second point de connexion de sortie 63b du dispositif adjacent. Si le dispositif 6 inclut un plus grand nombre de paires de fibres, et donc un plus grand nombre de points de connexion d'entrée et de sortie, ce même raisonnement reste valable pour tous les points de connexion supplémentaires. Dans le dispositif de dérivation 6 représenté en figures 1 ou 2, le premier point de connexion d'entrée 62a est relié par une paire de fibres optiques continues 61b au second point de connexion de sortie 63b, le premier point de connexion de sortie 62b est relié par une paire de fibres optiques continues 61a à un premier point de connexion de dérivation 64a et le second point de connexion d'entrée 63a est relié par une paire de fibres optiques continues 61 c à un second point de connexion de dérivation 64b. Ainsi, si le dispositif 6 comporte n points de connexion d'entrée de rangs 1 à n, correspondants à n points de connexion de sortie de rangs 1 à n, le raisonnement général suivant peut être appliqué :
- les points de connexion d'entrée de rangs 1 à n-1 sont connectés respectivement par une paire de guides optiques continues aux points de connexion de sortie de rangs 2 à n,
- le point de connexion d'entrée de rang n est connecté par une paire de guides optiques continues au second point de connexion de dérivation,
- le point de connexion de sortie de rang 1 est connecté par une paire de guides optiques continues au premier point de connexion de dérivation.

Le nombre n de points de connexion est choisi supérieur ou égal à 2.

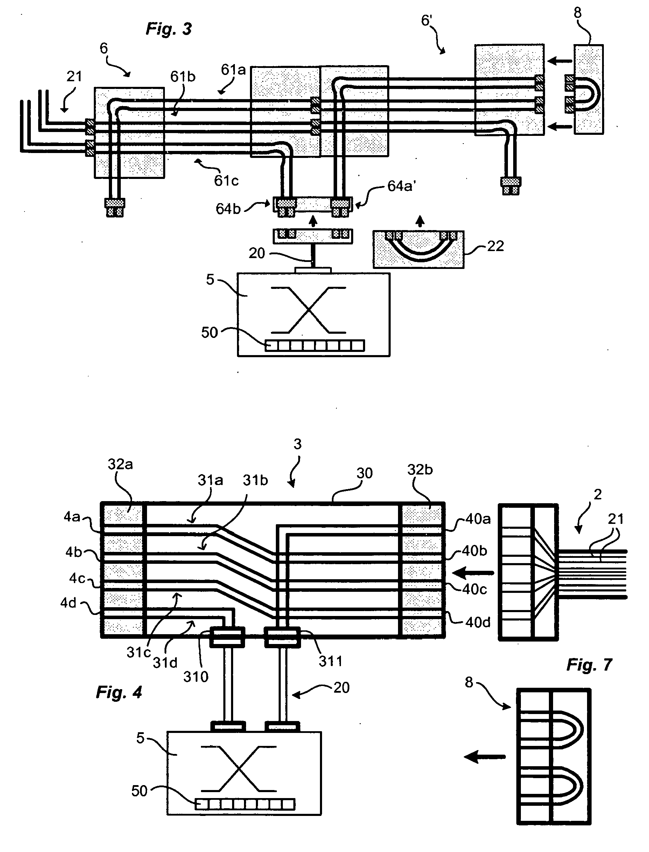

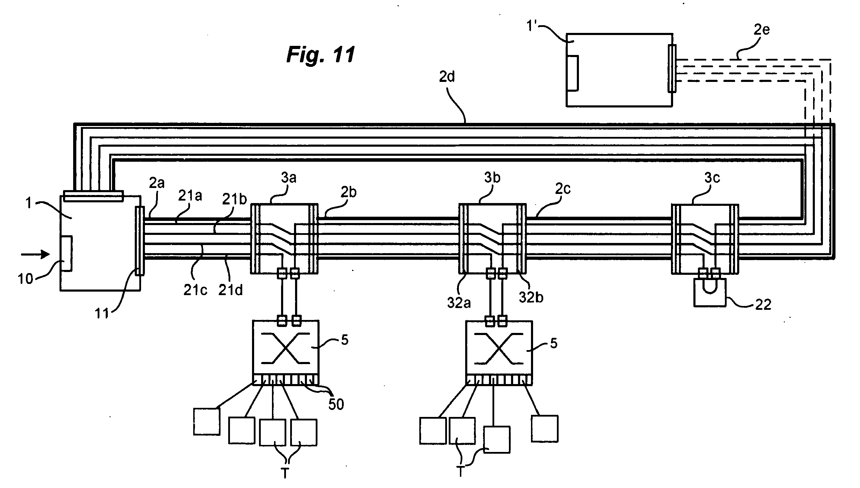

Dans une première variante du dispositif représentée en figure 1, le dispositif de dérivation 6 se présente sous la forme de deux demi-boîtiers 60a, 60b, par exemple en plastique, reliés et solidarisés par les paires de fibres optiques 61 du dispositif s'étendant entre eux selon la configuration décrite ci-dessus. Un premier demi-boîtier optique 20 présentant un connecteur d'extrémité complémentaire des deux points de connexion de dérivation 64b, 64a'. L'équipement 5 transforme par exemple les signaux optiques en signaux exploitables par les équipements situés en aval. L'équipement secondaire 5 présente par exemple plusieurs ports 50, par exemple de type Ethernet, sur lesquels peuvent venir se connecter des terminaux informatiques T. En revanche, si aucun équipement n'est connecté sur le point de dérivation ainsi formé, il est possible d'employer un adaptateur 22 (figure 3) permettant de raccorder les deux points de connexion de dérivation et ainsi d'assurer la continuité du réseau optique. La description de cet adaptateur est réalisée plus précisément ci-dessous, en liaison avec la figure 11.

En accouplant les dispositifs de dérivation 6, 6' de l'invention de la manière telle que représentée en figure 3, il est ainsi possible de réaliser plusieurs points de dérivation le long de la ligne de transmission et de construire une infrastructure de communication d'une topologie souhaitée adaptée au lieu d'implantation.

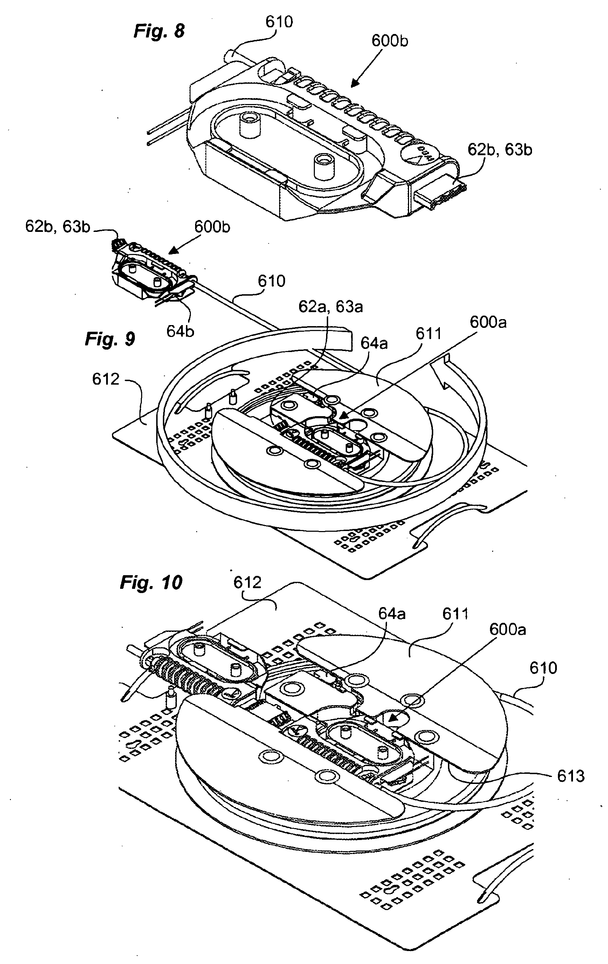

En référence aux figures 8 à 10, les deux demi-boîtiers 60a, 60b du dispositif représentés en figure 1 peuvent par exemple se présenter sous la forme de deux poignées 600a, 600b préhensibles manuellement, reliées entre elles par un câble optique 610 renfermant les paires de fibres optiques 61. Une première poignée 600a correspond au premier demi-boîtier 60a portant les points de connexion d'entrée 62a, 63a et une seconde poignée 600b correspond au second demi-boîtier 60b portant les points de connexion de sortie 62b, 63b. Les points de connexion de dérivation 64a, 64b sont reliés respectivement à chaque poignée par l'intermédiaire d'un câble optique renfermant la paire de fibres optiques disponible pour la dérivation. Chaque poignée supporte également le stockage des longueurs du câble optique menant vers les points de connexion de dérivation 64a, 64b. Le câble optique 610 reliant les deux poignées 600a, 600b peut être de différentes longueurs et est initialement enroulée autour d'une bobine 611 fixée sur un socle 612. Lorsqu'il est enroulé autour de la bobine 611, le câble optique 610 présente un rayon de courbure lui permettant tout de même de véhiculer un signal optique. Ainsi, même si toute la longueur de câble disponible n'est pas employée, il est possible de laisser les surlongueurs de câble enroulées autour de la bobine 611 sans perturber le passage d'un signal. Comme représenté en figure 10, l'une des poignées 600a est montée sur la bobine 611 pour recevoir la poignée 600b d'un dispositif adjacent n+1 tandis que l'autre poignée 600b est tirée par l'opérateur pour dérouler le câble optique 610 et rejoindre le dispositif de dérivation adjacent n-1 (figure 9). La poignée 600a est par exemple montée sur un rail 613 formé sur la bobine 611 lui permettant de coulisser pour pouvoir s'extraire et venir se connecter sur une poignée 600b d'un dispositif adjacent. En disposant des dispositifs de l'invention à différents endroits, il est donc possible de les interconnecter en tirant les câbles par les poignées. Le socle 612 supportant la bobine est par exemple fixé sur le sol à l'aide de vis. Par ailleurs, le dispositif prévoit des logements pour loger par exemple les points de connexion ou l'adaptateur 22 (figure 3) et peut présenter une épaisseur suffisamment faible, par exemple de 55 mm, pour être implanté sous un faux-plancher.

Selon un deuxième mode de réalisation de l'invention représenté en figure 4, le dispositif de dérivation 3 est constitué d'un boîtier ayant un corps 30 fermé, par exemple en matière plastique, doté également de points de connexion d'entrée et de points de connexion de sortie constitués par exemple respectivement d'un connecteur d'entrée 32a et d'un connecteur de sortie 32b. Les deux connecteurs 32a, 32b sont par exemple des connecteurs multi-fibres par exemple de type MPO (pour "Multi-fibers Push On"), MF ou MTP voire un groupement de connecteurs duplex du type LC, SC ou MRTJ sur lesquels peuvent se brancher un connecteur complémentaire d'un câble de transport 2. L'un des deux connecteurs 32a, 32b est par exemple un connecteur de type mâle ou femelle tandis que l'autre connecteur est un connecteur de type mâle ou femelle, de sorte que les deux connecteurs 32a, 32b présentent des zones de connexion 4a, 4b, 4c, 4d, 40a, 40b, 40c, 40d (référencée respectivement 4, 40 de manière générale) correspondantes (figure 4).

Chaque zone de connexion 4, 40 des connecteurs 32a, 32b comprend par exemple plusieurs points de connexion, chaque point de connexion étant par exemple associé à une fibre optique intégrée au boîtier 3.

En référence à la figure 4, le corps 30 du dispositif de dérivation 3 renferme ainsi plusieurs paires de fibres optiques continues (trois sur la figure 4) 31 a, 31 b, 31 c reliant chacune sans interruption une zone de connexion 4 du premier connecteur 32a à une zone de connexion 40 du second connecteur 32b du boîtier.

Le dispositif de dérivation 3 comporte également une paire de fibres optiques 31 d qui est interrompue une fois pour former un point de dérivation comportant quatre terminaisons optiques. Ces quatre terminaisons optiques sont reliées à des connexions optiques comportant par exemple un connecteur optique distinct monofibre pour chaque terminaison ou peuvent être réunies par paire dans deux connecteurs 310, 311 distincts (figure 1) ou dans un connecteur optique unique à quatre fibres regroupant les quatre terminaisons. Sur la connectique optique ainsi réalisée, il est possible de connecter un câble optique 20 à quatre fibres optiques menant vers un équipement secondaire 5, par exemple actif, tel que décrit ci-dessus.

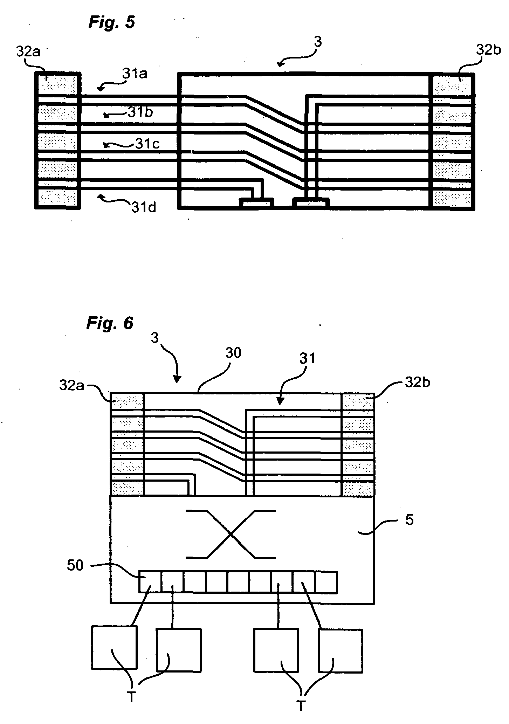

Selon l'invention, ces terminaisons optiques peuvent être également directement raccordées à l'équipement actif 5 qui est intégré au corps 30 du boîtier de dérivation 3 (figure 6). La transformation des signaux optiques provenant du concentrateur principal 1 en signaux exploitables par un équipement situé en aval, tel qu'un terminal informatique T est donc réalisée directement dans le dispositif de dérivation 3. Les ports 50, par exemple de type Ethernet, sont alors réalisés directement sur le corps 30 du dispositif de dérivation 3.

Dans le dispositif 3, les paires 31 a, 31 b, 31 c, 31 d de fibres optiques sont reliées aux deux connecteurs 32a, 32b (ou aux deux groupements de connecteurs) de sorte que, si plusieurs dispositifs de dérivation 3a, 3b, 3c, 3d identiques sont reliés entre eux par plusieurs câbles de transport 2a, 2b, 2c, 2d comme illustré sur la figure 11, une paire de fibres optiques qui est dérivée dans le dispositif de dérivation 3 se prolonge dans le dispositif de dérivation suivant par une paire de fibres optiques continues. Ainsi, le dispositif de dérivation 3 de l'invention peut permettre de garantir que chaque paire de fibres optiques 21 n'est dérivée qu'une seule fois sur la ligne de transmission.

Plus précisément, en référence à la figure 4, dans chaque dispositif de dérivation 3, une première paire de fibres optiques continues 31 a est d'une part reliée à la première zone de connexion 4a du premier connecteur 32a et d'autre part à la deuxième zone de connexion 40b du second connecteur 32b. Une deuxième paire 31 b de fibres optiques continues est reliée d'une part à la deuxième zone de connexion 4b du premier connecteur 32a et d'autre part à la troisième zone de connexion 40c du second connecteur 32b. Une troisième paire 31 c de fibres optiques continues est reliée d'une part à la troisième zone de connexion 4c du premier connecteur 32a et d'autre part à la quatrième zone de connexion 40d du second connecteur 32b. Enfin, la paire 31 d de fibres optiques dérivées est reliée d'une part à la quatrième zone de connexion 4d du premier connecteur 32a et d'autre part à la première zone de connexion 40a du second connecteur 32b.

Il résulte de cet agencement que, à chaque nouveau dispositif de dérivation 3 connecté, les paires de fibres optiques se décalent les unes par rapport aux autres.

Comme pour le premier mode de réalisation, si un point de dérivation n'est pas connecté, un adaptateur 22 est connecté entre deux points de connexion 310, 311 du dispositif de dérivation 3 pour assurer la continuité de la paire 31 de fibres optiques dérivées si celle-ci n'est raccordée à aucun équipement secondaire. Cet adaptateur 22 se présente par exemple sous la forme d'un capuchon éventuellement solidaire du boîtier du dispositif de dérivation. Ce capuchon intègre deux portions de fibres optiques présentant quatre terminaisons par exemple réunies par paire dans deux connecteurs optiques. En connectant ce capuchon 22 sur la connectique du point de dérivation, les quatre terminaisons optiques de la paire de fibres optiques dérivées sont raccordés pour assurer la continuité du signal à travers cette paire alors que le point de dérivation n'est pas employé.

Dans une variante de réalisation à ce second mode de réalisation, représentée en figure 5, les paires de fibres optiques 31 se prolongent d'un côté à l'extérieur du boîtier 3 jusqu'à un connecteur (le connecteur d'entrée 32a sur la figure 5), qui n'est donc par monté sur le boîtier 30 du dispositif. Le prolongement des paires de fibres optiques 31 peut être réalisé d'un seul côté ou des deux côtés du boîtier. Le(s) câble optique d'entrée et/ou de sortie se trouvent donc intégrés au boîtier sans connectique. Par rapport au dispositif représenté en figure 4, la configuration représentée en figure 5 permet donc de faire l'économie d'une connectique entre un câble optique indépendant et le dispositif.

La figure 11 représente un exemple d'une infrastructure de communication dans laquelle la ligne de transmission est dérivée plusieurs fois à l'aide des dispositifs de dérivation 3 du second mode de réalisation. Une même infrastructure de communication peut également être déployée en employant le dispositif de dérivation selon le premier mode de réalisation.

Sur cette figure 11, chaque paire de fibres optiques est représentée par un trait unique.

En référence à la figure 11, une infrastructure de communication informatique locale fonctionnant sous un protocole permettant le transfert de données par fibres optiques tel que par exemple Ethernet, ATM ou "Token Ring" comporte en tête un concentrateur principal 1 (figure 11), généralement actif, présentant des connexions d'entrée 10 pour recevoir différentes entrées, notamment optiques, provenant de serveurs et des connexions de sortie 11 transmettant des signaux optiques, par exemple en parallèle, sur plusieurs fibres optiques d'une ligne de transmission. Les connexions de sortie 11 sont des connecteurs multi-fibres de type MPO (Multi-fibbers Push-On), MF ou MTP (marque déposée) adaptés à la connectique MPO (Multi-fibbers Push-On), MF ou MTP (marque déposée) de la ligne de transmission. Les connecteurs MTP, MF et MPO étant bien connus, ils ne sont pas décrits dans cette demande. Les connexions de sortie 11 peuvent être également un groupement de plusieurs connecteurs duplex du type SC, LC ou MTRJ.

Selon l'invention, la ligne de transmission est composée de un ou plusieurs câbles optiques de transport 2a, 2b, 2c, 2d, 2e (référencé 2 de manière générale) connectés entre eux par l'intermédiaire de un ou plusieurs dispositifs de dérivation 3a, 3b, 3c du premier mode de réalisation de l'invention. Le câble 2d est par exemple un câble de retour permettant de reboucler le signal vers le concentrateur principal 1.

Chaque câble optique de transport 2 employé est un câble ininterrompu acheminant des signaux optiques à travers plusieurs paires de fibres optiques 21 a, 21 b, 21 c, 21 d (désignées 21) et présentant à chaque extrémité un connecteur multi-fibres par exemple de type MPO, MF ou MTP voire un groupement de connecteurs duplex du type LC, SC ou MRTJ adapté notamment à la connectique d'un dispositif de dérivation 3, 6 et du concentrateur principal 1.

Sur la figure 11, la ligne de transmission comporte quatre câbles de transport 2a, 2b, 2c, 2d reliés entre eux par l'intermédiaire de trois dispositifs de dérivation 3a, 3b, 3c et comportant chacun plusieurs paires de fibres optiques équivalentes 21 a, 21 b, 21 c, 21 d (référencées 21 de manière générale).

Sur la figure 11, une première paire 21 a de fibres optiques du premier câble 2a est décalée au niveau du premier dispositif de dérivation 3a pour se prolonger dans le second câble adjacent par la seconde paire 21 b de fibres optiques puis est de nouveau décalée au niveau du deuxième dispositif de dérivation 3b pour se prolonger dans le troisième câble 2c par la troisième paire de fibres optiques 21 c. De même, la seconde paire de fibres optiques 21 b du premier câble 2a de transport se prolonge dans le second câble 2b par la troisième paire de fibres optiques 21 c puis dans le troisième câble 2c par la quatrième paire de fibres optiques 21 d et la troisième paire de fibres optiques 21 c du premier câble 2a se prolonge dans le second câble 2b par la quatrième paire de fibres optiques 21 d puis dans le troisième câble 2c par la première paire de fibres optiques 21 a, celle-ci ayant été dérivée au niveau du second dispositif de dérivation 3b. La quatrième paire de fibres optiques 21d du premier câble 2a est pour sa part dérivée au niveau du premier dispositif de dérivation 3a et se prolonge donc dans le second câble 2b par la première paire de fibres optiques 21 a puis dans le troisième câble 2c par la seconde paire de fibres optiques 21 b.

Dans une infrastructure de communication respectant la topologie étoile et une conformité à la norme vers chaque équipement secondaire 5 connecté sur un point de dérivation, chaque paire de fibres optiques 21 d'un câble 2 n'est dérivée qu'une seule fois le long de la ligne de transmission. Dans une topologie de type étoile, la ligne de transmission ne peut donc comporter plus de dispositifs de dérivation 3 que de paires 21 de fibres optiques présentes dans la ligne de transmission. Sur la figure 11, la ligne de transmission comporte quatre paires de fibres optiques 21, une infrastructure ayant une topologie en étoile ne peut donc comporter au maximum que quatre dispositifs de dérivation 3 du premier mode de réalisation. Bien entendu, il est possible de prévoir une ligne de transmission comportant plus ou moins de paires de fibres optiques et d'employer un nombre de dispositifs de dérivation adapté au nombre de paires de fibres optiques de cette ligne de transmission et à la topologie que l'on souhaite mettre en oeuvre. Si une même paire de fibres optiques est dérivée plusieurs fois le long de la ligne de transmission, l'infrastructure de communication présente alors une topologie de type "daisy chain" ou "ring".

Une infrastructure de communication incluant une ligne de transmission dotée de un ou plusieurs dispositifs de dérivation 3, 6 selon la première ou la seconde configuration, peut être réalisée selon les variantes suivantes :
Selon une première variante de réalisation, le concentrateur 1 est connecté à la ligne de transmission et envoie des signaux sur les paires 21 de fibres optiques de la ligne. Selon cette configuration, aucun rebouclage des signaux n'est effectué. Ainsi si le signal présent sur une fibre d'émission d'une paire 21 est coupé (coupure de la fibre ou perte d'un équipement secondaire), tous les terminaux situés sur cette fibre, en aval du point de coupure, ne reçoivent plus aucun signal.
Selon une deuxième variante de réalisation, il est possible de prévoir à l'extrémité de la ligne de transmission un connecteur 8 de rebouclage permettant de relier les paires 21 de fibres optiques entre elles. Le schéma d'un tel connecteur est représenté en figures 3 et 7. Sur la figure 7, les paires 21 a, 21 b, 21 c, 21 d de fibres optiques sont raccordables entre elles, deux par deux, par l'intermédiaire du connecteur 8 de bouclage. Ainsi, par exemple, même si le signal est coupé sur une fibre d'une paire 21 (coupure de la fibre ou perte d'un équipement secondaire), le signal peut tout de même atteindre les terminaux T situés en aval du point de coupure en passant par la paire de fibres située en parallèle.
Selon une troisième variante de réalisation, la ligne de transmission peut être rebouclée à l'aide d'un câble optique multi-fibres de transport 2d connecté sur le connecteur 32b du dernier boîtier de dérivation 3c pour relier la ligne de transmission au concentrateur principal 1 (figure 11). Ainsi le concentrateur principal dispose de deux chemins possibles pour envoyer les signaux sur les fibres optiques de la ligne de transmission.
Selon une quatrième variante de réalisation de l'invention (2e en pointillés sur la figure 11), la ligne de transmission peut être reliée à chaque extrémité à un concentrateur principal 1, 1' différent. Dans ce cas, chacun des concentrateurs principaux 1, 1' est connecté aux serveurs centraux et peut recevoir des données de ces serveurs pour les transmettre, par exemple en parallèle, sur les paires de fibres de la ligne de transmission. Dans cette variante, le câble 2d optique de retour en trait plein n'est plus nécessaire. De même, il est également possible de relier directement les deux concentrateurs 1, 1' entre eux pour assurer de la redondance (variante non représentée).

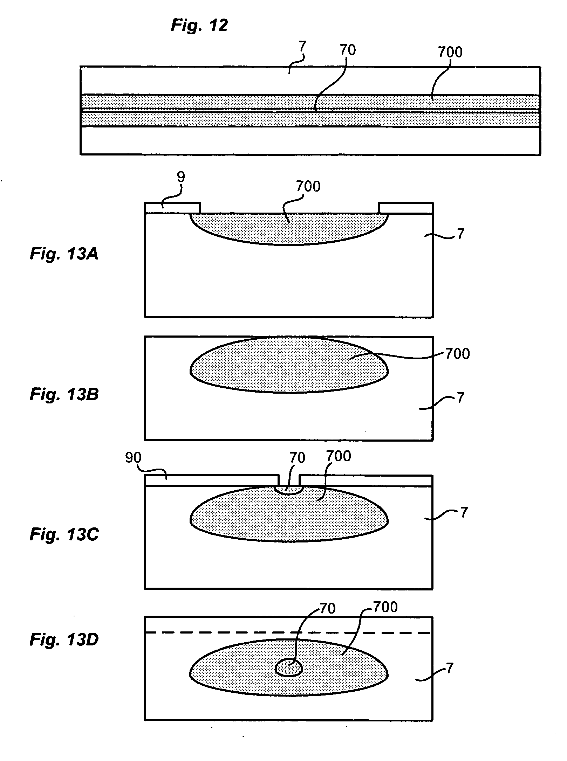

Selon l'invention, en remplacement des fibres optiques traditionnels, les dispositifs de dérivation de l'invention peuvent employer des composants à gaine artificielle tels que décrits dans les brevets FR28729298 ou FR2839558 et tels que représentés sur les figures 12 à 13D.

En référence à la figure 12, ce type de composant comporte un substrat 7 dans lequel est réalisé un coeur de guide optique 70 et une gaine optique 700 entourant le coeur de guide optique 70 sur au moins une partie de sa longueur (sur toute sa longueur en figure 12) pour définir une zone d'interaction entre le coeur 70 et la gaine 700. L'indice de réfraction de la gaine optique 700 est différent de l'indice de réfraction du substrat 7 et inférieur à l'indice de réfraction du coeur 70 dans la zone d'interaction. L'onde lumineuse peut ainsi être introduite dans la zone d'interaction soit par le coeur de guide optique 70, soit par la gaine optique 700. Le substrat peut être réalisé à partir d'un seul matériau tel que le verre ou résulter d'un assemblage de couches de plusieurs matériaux.

La gaine optique 700 et le coeur de guide optique 70 sont indépendants l'un de l'autre de sorte que la gaine 700 et le coeur de guide optique 70 peuvent exister dans le substrat 7 indépendamment l'un de l'autre.

Selon l'invention, le boîtier de dérivation 3 peut donc être réalisé à partir d'un composant à gaine artificielle ou intégrer dans son corps 30 un tel composant. L'agencement et les fonctionnalités du boîtier de dérivation 3 réalisé à partir des fibres optiques sont identiques pour le boîtier comportant un tel composant à gaine artificielle. Un tel composant peut aussi être intégré dans le boîtier 60 ou les demi-boîtiers 60a, 60b du dispositif de dérivation selon le second mode de réalisation.

Les connecteurs multifibres 32a, 32b, sont par exemple surmoulés dans le substrat 7 afin de gagner en compacité et de réduire les coûts de la connectique. En outre, afin de limiter les pertes optiques et de conserver le budget optique, il est également possible de supprimer la connectique entre le boîtier 3 et un câble de transport 2 et de proposer un câble prééquipé d'un boîtier de dérivation 3 à l'une de ses extrémités (figure 5). Pour cela, les paires 21 de fibres optiques du câble de transport 2 sont directement enrobées dans le substrat 7 et reliées directement aux coeurs de guides optiques 70 formés dans ce substrat 7. De même les connecteurs 310, 311 peuvent également être réalisés par surmoulage dans le substrat 7 du composant.

Ce type de composant à gaine artificielle est facilement industrialisable et est parfaitement reproductible. Il permet d'obtenir des boîtiers de dérivation de qualité, plus compacts, plus robustes et dotés de performances accrues.

Les figures 13A à 13D illustrent un procédé de fabrication par échange d'ions d'un tel composant.

Sur la figure 13A, le substrat 7 est par exemple réalisé en verre et contient des ions X (par exemple Na⁺). Un masque 9 est réalisé par exemple par photolithographie sur une des faces du substrat 7.

A partir de ce masque on réalise la gaine optique 700 de la taille souhaitée. La gaine optique 700 est formée par trempage du substrat 7 muni du masque 9 dans un bain contenant des ions Y (par exemple Ag⁺).

Sur la figure 13C, à partir d'un nouveau masque 90, on réalise le coeur de guide optique 70 par trempage du substrat dans un bain contenant les ions Z (par exemple Ag⁺).

L'application d'un champ électrique peut permettre de faciliter la migration des ions Y et Z vers le centre du substrat 7 pour réaliser l'enterrage final de la gaine 700 et du coeur de guide optique 70.

Plus de détails sur ce procédé de fabrication sont rapportés dans les brevets cités ci-dessus.

## Revendications

1. Dispositif de dérivation (6) prééquipé utilisable dans une infrastructure de communication présentant une ligne de transmission constituée de paires de fibres optiques (21), ledit dispositif comportant plusieurs paires de guides optiques (61) et
- n points de connexion d'entrée (62a, 63a) de rangs 1 à n, correspondants à n points de connexion de sortie (62b, 63b) de rangs 1 à n, n étant choisi supérieur ou égal à deux,
- chaque point de connexion d'entrée (62a, 63a) et de sortie (62b, 63b) recevant les terminaisons d'une paire de guides optiques,
- deux points de connexion de dérivation (64a, 64b) recevant chacun les terminaisons d'une paire de guides optiques, et **caractérisé en ce que** :
- les points de connexion d'entrée de rangs 1 à n-1 sont connectés respectivement par une paire de guides optiques continues aux points de connexion de sortie de rangs 2 à n,
- le point de connexion de sortie (62b) de rang 1 est connecté par une paire de guides optiques continues (61 a) à un premier point de connexion de dérivation (64a),
- le point de connexion d'entrée (63a) de rang n est connecté par une paire de guides optiques continues (61 c) à un second point de connexion de dérivation (64b).

2. Dispositif selon la revendication 1, **caractérisé en ce que** le dispositif (6) est constitué de deux demi-boîtiers (60a, 60b) reliés et solidarisés par les paires de guides optiques continues s'étendant entre eux, un premier demi-boîtier (60a) portant les points de connexion d'entrée (62a, 63a) et le premier point de connexion de dérivation (64a) et un second demi-boîtier (60b) portant les points de connexion de sortie (62b, 63b) et le second point de connexion de dérivation (64b).

3. Dispositif selon la revendication 2, **caractérisé en ce que** le premier demi-boîtier (60a), respectivement le second demi-boîtier (60b), d'un dispositif de dérivation (6) est apte à se connecter sur le second demi-boîtier (60b), respectivement le premier demi-boîtier (60a), d'un dispositif de dérivation (6') identique adjacent.

4. Dispositif selon la revendication 2 ou 3, **caractérisé en ce que** chaque demi-boîtier (60a, 60b) se présente sous la forme d'une poignée (600a, 600b) préhensible manuellement, chaque poignée (600a, 600b) portant respectivement les points de connexion d'entrée (62a, 63a) et les points de connexion de sortie (62b, 63b).

5. Dispositif selon la revendication 4, **caractérisé en ce que** les deux poignées (600a, 600b) sont reliées entre elles par un câble optique (610) contenant les guides optiques, ledit câble optique (610) étant enroulé autour d'une bobine (611) montée sur un socle (612), le câble optique (610) enroulé autour de la bobine ayant un rayon de courbure adapté pour permettre le transport d'un signal.

6. Dispositif selon la revendication 5, **caractérisé en ce que** l'une des poignées (600a) est montée sur un rail (613) formé sur la bobine (611).

7. Dispositif selon la revendication 1, **caractérisé en ce qu'**il comporte un adaptateur (22) de raccordement branché sur le premier point de connexion de dérivation (64a), respectivement second point de connexion de dérivation (64b), et sur le second point de connexion de dérivation (64b), respectivement premier point de connexion de dérivation (64a), d'un dispositif de dérivation (6') identique adjacent de manière à assurer la continuité optique lorsque le point de dérivation n'est pas employé.

8. Dispositif selon la revendication 1, **caractérisé en ce que** les points de connexion d'entrée (62a, 63a) sont de type mâle et les points de connexion de sortie (62b, 63b) sont de type femelle.

9. Dispositif selon la revendication 1, **caractérisé en ce que** les guides optiques sont constitués de fibres optiques (61).

10. Dispositif selon la revendication 9, **caractérisé en ce que** les points de connexion d'entrée (62a, 63a) et de sortie (62b, 63b), ainsi que les points de connexion de dérivation (64a, 64b) sont constitués de connecteurs multifibres.

11. Dispositif selon la revendication 1, **caractérisé en ce que** les guides optiques sont formés dans un composant à gaine artificielle comportant un substrat (7) dans lequel est formé un coeur de guide optique (70).

12. Dispositif selon la revendication 1, **caractérisé en ce que** l'infrastructure de communication fonctionne sous le protocole Ethernet.

13. Infrastructure de communication, **caractérisée en ce qu'**elle comporte au moins un concentrateur (1) relié à une première extrémité d'une ligne de transmission comprenant au moins deux câbles optiques de transport et plusieurs dispositifs de dérivation (6) tels que défini dans l'une des revendications 1 à 9 pour former des points de dérivation le long de la ligne de transmission, ledit concentrateur étant apte à envoyer des données sur chaque paire (21) de guides optiques de la ligne de transmission.

14. Infrastructure selon la revendication 13, **caractérisée en ce que** la ligne de transmission présente une seconde extrémité raccordée au concentrateur (1) par une liaison optique de retour (2d).

15. Infrastructure selon la revendication 13, **caractérisée en ce que** la ligne de transmission présente une seconde extrémité raccordée à un second concentrateur (1') apte à envoyer des données sur chaque paire (21) de guides optiques de la ligne de transmission.

16. Infrastructure selon la revendication 13, **caractérisée en ce que** la ligne de transmission présente une seconde extrémité à laquelle les paires (21) de guides optiques sont raccordées deux par deux par l'intermédiaire d'un connecteur (8).

17. Infrastructure selon l'une des revendications 13 à 16, **caractérisée en ce que** le concentrateur (1, 1') comporte un connecteur multi-fibres (11) pour connecter une extrémité de la ligne de transmission.

18. Infrastructure selon l'une des revendications 13 à 17, **caractérisée en ce qu'**elle fonctionne sous le protocole Ethernet.

## Patentansprüche

1. Vorbestückte Abzweigvorrichtung (6), die in einer Kommunikationsinfrastruktur verwendbar ist, die eine Übertragungsleitung aufweist, welche aus Paaren von Lichtleitfasern (21) besteht, wobei die Vorrichtung mehrere Paare von Lichtwellenleitern (61) aufweist und
- n Eingangsverbindungspunkte (62a, 63a) der Ränge 1 bis n entsprechend n Ausgangsverbindungspunkten (62b, 63b) der Ränge 1 bis n, wobei n größer als oder gleich zwei gewählt wird,
- wobei jeder Eingangsverbindungspunkt (62a, 63a) und Ausgangsverbindungspunkt (62b, 63b) die Endeinrichtungen eines Paars von Lichtwellenleitern empfängt,
- wobei zwei Abzweigverbindungspunkte (64a, 64b) je die Endeinrichtungen eines Paars von Lichtwellenleitern empfangen, und
**dadurch gekennzeichnet, dass**:
- die Eingangsverbindungspunkte der Ränge 1 bis n-1 je von einem Paar von durchgehenden Lichtwellenleitern mit den Ausgangsverbindungspunkten der Ränge 2 bis n verbunden werden,
- der Ausgangsverbindungspunkt (62b) des Rangs 1 von einem Paar von durchgehenden Lichtwellenleitern (61a) mit einem ersten Abzweigverbindungspunkt (64a) verbunden wird,
- der Eingangsverbindungspunkt (63a) des Rangs n von einem Paar von durchgehenden Lichtwellenleitern (61c) mit einem zweiten Abzweigverbindungspunkt (64b) verbunden wird.

2. Vorrichtung nach Anspruch 1, **dadurch gekennzeichnet, dass** die Vorrichtung (6) aus zwei verbundenen Halbgehäusen (60a, 60b) besteht, die von den sich zwischen ihnen erstreckenden Paaren von durchgehenden Lichtwellenleitern verbunden und zusammengehalten werden, wobei ein erstes Halbgehäuse (60a) die Eingangsverbindungspunkte (62a, 63a) und den ersten Abzweigverbindungspunkt (64a) und ein zweites Halbgehäuse (60b) die Ausgangsverbindungspunkte (62b, 63b) und den zweiten Abzweigverbindungspunkt (64b) trägt.

3. Vorrichtung nach Anspruch 2, **dadurch gekennzeichnet, dass** das erste Halbgehäuse (60a) bzw. das zweite Halbgehäuse (60b) einer Abzweigvorrichtung (6) mit dem zweiten Halbgehäuse (60b) bzw. dem ersten Halbgehäuse (60a) einer benachbarten gleichen Abzweigvorrichtung (6') verbunden werden kann.

4. Vorrichtung nach Anspruch 2 oder 3, **dadurch gekennzeichnet, dass** jedes Halbgehäuse (60a, 60b) in Form eines manuell ergreifbaren Griffs (600a, 600b) vorliegt, wobei jeder Griff (600a, 600b) die Eingangsverbindungspunkte (62a, 63a) bzw. die Ausgangsverbindungspunkte (62b, 63b) trägt.

5. Vorrichtung nach Anspruch 4, **dadurch gekennzeichnet, dass** die zwei Griffe (600a, 600b) miteinander durch ein Lichtleiterkabel (610) verbunden sind, das die Lichtwellenleiter enthält, wobei das Lichtleiterkabel (610) um eine auf einen Sockel (612) montierte Spule (611) gewickelt ist, wobei das um die Spule gewickelte Lichtleiterkabel (610) einen geeigneten Krümmungsradius hat, um den Transport eines Signals zu erlauben.

6. Vorrichtung nach Anspruch 5, **dadurch gekennzeichnet, dass** einer der Griffe (600a) auf eine auf der Spule (611) geformte Schiene (613) montiert ist.

7. Vorrichtung nach Anspruch 1, **dadurch gekennzeichnet, dass** sie einen Anschlussadapter (22) aufweist, der an den ersten Abzweigverbindungspunkt (64a) bzw. den zweiten Abzweigverbindungspunkt (64b) und an den zweiten Abzweigverbindungspunkt (64b) bzw. den ersten Abzweigverbindungspunkt (64a) einer benachbarten gleichen Abzweigvorrichtung (6') angeschlossen ist, um die optische Kontinuität zu gewährleisten, wenn der Abzweigpunkt nicht genutzt wird.

8. Vorrichtung nach Anspruch 1, **dadurch gekennzeichnet, dass** die Eingangsverbindungspunkte (62a, 63a) vom Einstecktyp und die Ausgangsverbindungspunkte (62b, 63b) vom Aufnahmetyp sind.

9. Vorrichtung nach Anspruch 1, **dadurch gekennzeichnet, dass** die Lichtwellenleiter aus Lichtleitfasern (61) bestehen.

10. Vorrichtung nach Anspruch 9, **dadurch gekennzeichnet, dass** die Eingangsverbindungspunkte (62a, 63a) und Ausgangsverbindungspunkte (62b, 63b) sowie die Abzweigverbindungspunkte (64a, 64b) aus Mehrfaserverbindern bestehen.

11. Vorrichtung nach Anspruch 1, **dadurch gekennzeichnet, dass** die Lichtwellenleiter in einem Bauteil mit künstlicher Hülle geformt sind, das ein Substrat (7) aufweist, in dem ein Lichtwellenleiterkern (70) geformt ist.

12. Vorrichtung nach Anspruch 1, **dadurch gekennzeichnet, dass** die Kommunikationsinfrastruktur mit dem Ethernet-Protokoll arbeitet.

13. Kommunikationsinfrastruktur, **dadurch gekennzeichnet, dass** sie mindestens einen Konzentrator (1) aufweist, der mit einem ersten Ende einer Übertragungsleitung verbunden ist, die mindestens zwei Transport-Lichtleiterkabel und mehrere Abzweigvorrichtungen (6) wie in einem der Ansprüche 1 bis 9 definiert aufweist, um Abzweigpunkte entlang der Übertragungsleitung zu formen, wobei der Konzentrator auf jedem Paar (21) von Lichtwellenleitern der Übertragungsleitung Daten senden kann.

14. Infrastruktur nach Anspruch 13, **dadurch gekennzeichnet, dass** die Übertragungsleitung ein zweites Ende aufweist, das an den Konzentrator (1) durch eine optische Rückverbindung (2d) angeschlossen ist.

15. Infrastruktur nach Anspruch 13, **dadurch gekennzeichnet, dass** die Übertragungsleitung ein zweites Ende aufweist, das an einen zweiten Konzentrator (1') angeschlossen ist, der Daten auf jedem Paar (21) von Lichtwellenleitern der Übertragungsleitung senden kann.

16. Infrastruktur nach Anspruch 13, **dadurch gekennzeichnet, dass** die Übertragungsleitung ein zweites Ende aufweist, an das die Paare (21) von Lichtwellenleitern mittels eines Verbinders (8) paarweise angeschlossen sind.

17. Infrastruktur nach einem der Ansprüche 13 bis 16, **dadurch gekennzeichnet, dass** der Konzentrator (1, 1') einen Mehrfaserverbinder (11) aufweist, um ein Ende der Übertragungsleitung zu verbinden.

18. Infrastruktur nach einem der Ansprüche 13 bis 17, **dadurch gekennzeichnet, dass** sie mit dem Ethernet-Protokoll arbeitet.

## Claims

1. Pre-equipped bypass device (6) for use in a communications infrastructure exhibiting a transmission line composed of pairs of optical fibres (21), said device having several pairs of optical guides (61) and
- n input connection points (62a, 63a) of ranks 1 to n, corresponding to n output connection points (62b, 63b) of ranks 1 to n, n being chosen greater than or equal to two,
- each input connection point (62a, 63a) and output connection point (62b, 63b) receiving the terminations of a pair of optical guides,
- two bypass connection points (64a, 64b) each receiving the terminations of a pair of optical guides, and **characterized in that**:
- the input connection points of ranks 1 to n-1 are respectively connected by a pair of continuous optical guides to the output connection points of ranks 2 to n,
- the output connection point (62b) of rank 1 is connected by a pair of continuous optical guides (61a) to a first bypass connection point (64a),
- the input connection point (63a) of rank n is connected by a pair of continuous optical guides (61c) to a second bypass connection point (64b).

2. Device according to Claim 1, **characterized in that** the device (6) is composed of two housing halves (60a, 60b) linked and fastened by the pairs of continuous optical guides extending between them, a first housing half (60a) carrying the input connection points (62a, 63a) and the first bypass connection point (64a) and a second housing half (60b) carrying the output connection points (62b, 63b) and the second bypass connection point (64b).

3. Device according to Claim 2, **characterized in that** the first housing half (60a) and the second housing half (60b) of a bypass device (6) are able to be connected to the second housing half (60b) and the first housing half (60a), respectively, of an adjacent identical bypass device (6').

4. Device according to Claim 2 or 3, **characterized in that** each housing half (60a, 60b) takes the form of a handle (600a, 600b) that can be grasped manually, each handle (600a, 600b) respectively carrying the input connection points (62a, 63a) and the output connection points (62b, 63b).

5. Device according to Claim 4, **characterized in that** the two handles (600a, 600b) are interlinked by an optical cable (610) containing the optical guides, said optical cable (610) being wound around a reel (611) mounted on a base (612), the optical cable (610) wound around the reel having a radius of curvature suitable for allowing the transport of a signal.

6. Device according to Claim 5, **characterized in that** one of the handles (600a) is mounted on a rail (613) formed on the reel (611).

7. Device according to Claim 1, **characterized in that** it has a connection adapter (22) plugged into the first bypass connection point (64a) and the second bypass connection point (64b) and into the second bypass connection point (64b) and the first bypass connection point (64a), respectively, of an adjacent identical bypass device (6') so as to ensure optical continuity when the bypass point is not in use.

8. Device according to Claim 1, **characterized in that** the input connection points (62a, 63a) are of male type and the output connection points (62b, 63b) are of female type.

9. Device according to Claim 1, **characterized in that** the optical guides are composed of optical fibres (61).

10. Device according to Claim 9, **characterized in that** the input connection points (62a, 63a) and the output connection points (62b, 63b) as well as the bypass connection points (64a, 64b) are composed of multifibre connectors.

11. Device according to Claim 1, **characterized in that** the optical guides are formed in a component with artificial cladding having a substrate (7) in which an optical guide core (70) is formed.

12. Device according to Claim 1, **characterized in that** the communications infrastructure operates under the Ethernet protocol.

13. Communications infrastructure, **characterized in that** it has at least one hub (1) linked to a first end of a transmission line comprising at least two optical transport cables and several bypass devices (6) as defined in one of Claims 1 to 9 to form bypass points along the transmission line, said hub being able to send data on each pair (21) of optical guides of the transmission line.

14. Infrastructure according to Claim 13, **characterized in that** the transmission line exhibits a second end attached to the hub (1) by a return optical link (2d).

15. Infrastructure according to Claim 13, **characterized in that** the transmission line exhibits a second end attached to a second hub (1') able to send data on each pair (21) of optical guides of the transmission line.

16. Infrastructure according to Claim 13, **characterized in that** the transmission line exhibits a second end to which the pairs (21) of optical guides are attached two by two by means of a connector (8).

17. Infrastructure according to one of Claims 13 to 16, **characterized in that** the hub (1,1') has a multifibre connector (11) for connecting one end of the transmission line.

18. Infrastructure according to one of Claims 13 to 17, **characterized in that** it operates under the Ethernet protocol.
